# EUROPEAN PATENT APPLICATION

(11) **EP 2 915 756 A1**
(43) Date of publication of application: **09.09.2015**
(21) Application number: 15000630.2
(22) Date of filing: 05.03.2015
(51) Int. Cl.: B65B 43/18, B65B 57/04, B65H 7/02, B65H 7/20, B65H 9/06

(54) **BAG SUPPLY METHOD AND DEVICE**

(30) Priority: 06.03.2014 JP 2014043709
(71) Applicant: Toyo Jidoki Co., Ltd., Tokyo (JP)
(72) Inventor: Nakamoto, Kakue, Yamaguchi (JP); Yoshikane, Tohru, Yamaguchi (JP)
(74) Representative: Schubert, Siegmar

(57) **Abstract**

A bag supply method and device transfers bags one at a time, starting with the bag at the very top, from a conveyor magazine (6) to a positioning device (8), conveys One bag (11) in one direction on a belt conveyor (96) of the positioning device, so that the bag is positioned when it hits a stopper (99), then a suction cup (128) holds the bag, the suction cup is next raised to lift the bag from the conveyance path of the belt conveyor, and after this, if a second sensor (103) detects that an extra bag(s) that was beneath the lifted bag remains on the conveyance path, the stopper is lowered and retracted from the conveyance path, so that the extra bag is conveyed and discharged.

## Description

### BACKGROUND OF THE INVENTION

### 1. Field of the Invention

The present invention relates to a method and device for supplying a bag applicable when empty bags are supplied to various bag manufacturing devices of, for example, a bag filling and packaging apparatus, a spout attachment apparatus, etc.

### 2. Description of the Related Art

The bag supply device disclosed in Japanese Patent Application Laid-Open (Kokai) No.

H10-287309 includes a conveyor magazine and a positioning device that is provided in a straight line in front of the conveyor magazine. In this conveyor magazine, numerous empty bags are stacked on a belt conveyor, with the uppermost bag offset forward in the lengthwise direction of the bags. On the belt conveyor of the conveyor magazine, bags are separated one by one, starting with the bag at the very top (which is at the very front), and then the bag are rapidly fed forward, so that each one of the bags hits or comes into contact with a stopper installed near the distal or front end of the belt conveyor. After hitting the stopper, the bag is held by a suction cup, and then the bag is raised to be fed into a positioning device. In this positioning device, the bag is conveyed forward by a second belt conveyor and positioned when the bag hits or comes into contact with a stopper installed near the distal end of the second conveyor. This bag is then held by another suction cup and supplied to the grippers of a bag filling and packaging apparatus.

The bag supply device disclosed in Japanese Patent Application Laid-Open (Kokai) No. 2002-53107 includes a bag stack maintenance device (a descending/ascending magazine) and a positioning device provided adjacent thereto. In the bag stack maintenance device, numerous empty bags are stacked substantially horizontally. Of these bags, the bag located at the very top is held by a suction cup one by one successively and fed into a positioning device. In the positioning device, the bag is placed on a bag placement plate equipped with a belt conveyor and is next squeezed between a belt and a feed roller so that the bag is conveyed forward over this plate and it hits a stopper installed at the front end of the bag placement plate and is thereby positioned. This bag is then held by another suction cup and supplied to a bag filling and packaging apparatus.

The bag supply device disclosed in Japanese Patent Application Laid-Open (Kokai) No. 2007-290768 includes a bag stocking mechanism (a cassette-style magazine) and a positioning device that is provided adjacent thereto. In the bag stocking mechanism, numerous empty bags are stacked in an erected orientation. Of these, the bag located at the very top (which is at the distal or front end of the stack) is held one by one successively by a suction cup and fed into a positioning device. In the positioning device, the bag is placed on a plate equipped with a belt conveyor and conveyed forward by a toothed wheel and a belt over this plate, and then the bag is positioned upon hitting a stopper installed at the front end of the plate. This bag is next held by another suction cup, then by a chuck and supplied to the grippers of a bag filling and packaging apparatus.

The bag supply device disclosed in Japanese Patent Application Laid-Open (Kokai) No. 2010-36913 includes a conveyor magazine and a positioning device installed ahead of this conveyor magazine. The conveyor magazine is basically the same as that disclosed in Japanese Patent Application Laid-Open (Kokai) No. H10-287309. After hitting a stopper of the conveyor magazine, the bag is held by a suction cup and raised, then it is transferred midway from the suction cup to a chuck and then from the chuck to another suction cup, after which the bag is fed into a positioning device. In the positioning device, the bag comes into contact with a stopper installed near the distal end of a tilted belt conveyor and is thereby positioned. This bag is then held by yet another suction cup, then by a chuck, and supplied to the grippers of a bag filling and packaging apparatus.

In each of the above described Japanese Patent Application Laid-Open (Kokai) Nos. H10-287309,2002-53107,2007-290768 and 2010-36913, the bag located at the very top of a magazine in which numerous empty bags are stacked is taken out one by one successively and fed into a positioning device (in the case of a conveyor magazine, the bag that comes into contact with the stopper is taken out one by one successively and fed into a positioning device), and then it is positioned again in this positioning device, so that it is eventually supplied to a bag filling and packaging apparatus.

However, the bags stacked in a magazine sometimes stick together due to static electricity or the like. If this happens, when the bag located at the very top (in the case of a conveyor magazine, a bag that has hit the stopper) is held by a suction cup, the other bags below the top bag may be lifted up together (this is called "multiple bag pickup"), so that a plurality of bags would be fed in an unseparated fashion into the next positioning device. In Japanese Patent Application Laid-Open (Kokai) No. 2010-36913, a bag that has come into contact the stopper of a conveyor magazine is held and lifted by a suction cup, transferred to a chuck, and then transferred from the chuck to another suction cup, so that it is fed into the positioning device. Accordingly, even if multiple bag pickup should occur, it is very likely that the bags will be separated from one another along the way, and the ones that are not directly held by the suction cup will fall off, but even so, there are still situations when multiple bags are fed together into the positioning device as is.

If a plurality of bags were fed into the positioning device while still unseparated, when the next bag to be positioned is picked up by the suction cup so as to be supplied to the bag filling and packaging apparatus, the extra bags would also be picked up together while still unseparated, or they would separate and remain in the positioning device. If extra bags are left behind in the positioning device, then they would pile up with the bags that are subsequently fed in, and this causes problems such as difficulty of positioning of bags that are fed in next. If this happens, not just the bag supply device, but the entire system, including the bag filling and packaging apparatus and so forth, will come to a halt, and the extra bags will need to be removed to fix the problem.

### BRIEF SUMMARY OF THE INVENTION

The present invention is made in light of the above-described problems encountered with conventional bag supply devices, and it is an object of the present invention to provide a bag supply method and device that keeps such problems from occurring in the event that a plurality of bags should be fed together into a positioning device and extra bags are left behind in the positioning device.

The above-described object is accomplished by unique steps of the present invention for a bag supply method in which bags are transferred one at a time, starting with the bag at the very top, from a magazine in which numerous empty bags are stacked to a positioning device, the bag is conveyed in one direction on a conveyor of the positioning device, the bag is positioned when it hits or comes into contact with a stopper at a predetermined position on the conveyance path, the positioned bag is held by a suction cup, the suction cup is raised to lift the held bag from the conveyance path, and the bag is then transferred to a predetermined delivery position; and in this method, according to the present invention, when there are not one but a plurality of bags transferred to the positioning device, if a sensor detects that any extra bags remain on the upstream side of the stopper on the conveyance path after the positioned bag is held by the suction cup and lifted up from the conveyance path, the stopper is retracted from the conveyance path, so that the extra bags are conveyed (to be discharged) along the conveyance path to the downstream side of the stopper.

The above-described object is accomplished also by a unique structure of the present invention for a bag supply device that implements the above-described bag supply method, and this bag supply device includes:
a magazine in which numerous empty bags are stacked,
a first transfer device that takes out and transfers bags one at a time from the magazine, starting with the one at the very top in the stack,
a positioning device that receives and conveys bags one at a time from the first transfer device and positions it at a predetermined position on a bag conveyance path, and
a second transfer device that holds the positioned bag with a suction cup, raises the suction cup to lift the held bag up from the conveyance path, and transfers the bag to a predetermined delivery position; and
in the present invention,
the positioning device comprises:
a conveyor on which bags are placed and conveyed in one direction,
a stopper that stops the bag at a predetermined position on the conveyance path of the conveyor,
a first sensor that detects when the bag is in contact with the stopper,
a second sensor that detects whether or not any extra bags remain on the upstream side of the stopper on the conveyance path, and
a control device that controls the operations of the positioning device and the second transfer device on the basis of detection signals from the first and second sensors;
the stopper is movable between a restricting position where the stopper stops the bags and a retracted position where the stopper passes through the bags; and
the control device
operates, on the basis of a detection signal from the first sensor, the second transfer device so as to raise the bag held by the suction cup a specific height over the conveyance path, and
retracts, when the second sensor detects an extra bag, the stopper to the retracted position on the basis of the detection signal of the second sensor, so that any extra bags are conveyed along the conveyance path to the downstream side of the stopper.

The above-described bag supply device can take the following embodiments:
(1) The control device stops the conveyor on the basis of a detection signal from the first sensor and then restarts the conveyor when the second sensor detects the extra bag(s).
(2) The conveyor is a belt conveyor that is comprised of a plurality of belts, and the stopper is able to go up and down, so that its upper end protrudes upward from between the belts when the stopper is at the restricting (raised) position.
(3) The conveyor is comprised of an upstream conveyor and a downstream conveyor, the upstream conveyor conveys a bag along the conveyance path at least until the bag hits or contacts the stopper, and the downstream conveyor conveys the bag farther down the downstream side.
(4) In the positioning device, a separating member that prevents multiple bag pickup is provided so as to be in the middle of the ascending path of the bag held by the suction cup of the second bag transfer device, so that the bag(s) being ascended by the suction cup contacts the separating member and separated.

In view of the above, according to the present invention, if a plurality of bags happen to be taken out of a magazine (multiple bag pickup is thus occurred) and fed together into a positioning device, and the extra bags are left behind inside the positioning device, these bags can be reliably discharged from the positioning device. Accordingly, problems such as difficulty of positioning bags that are fed in next, which is caused when extra bags are left behind in the positioning device, can be prevented. As a result, the necessity of halting not just in the bag supply device, but in the entire system, including the bag filling and packaging apparatus and so forth, as well as the work to remove the extra bags from the positioning device, can be avoided.

### BRIEF DESCRIPTION OF THE SEVERAL VIEWS OF THE DRAWINGS

FIG. 1 is a side view of a first transfer device and a conveyor magazine, which are part of the bag supply device according to the present invention;
FIG. 2 is a side view of the positioning device that is a main component of the bag supply device of the present invention;
FIG. 3 is a top view thereof;
FIG. 4 is a side view illustrating in time-series fashion the operation of the first transfer device and the positioning device;
FIG. 5 is a side view illustrating in time-series fashion the operation of the first transfer device and the positioning device;
FIG. 6 is a side view illustrating in time-series fashion the operation of the first transfer device and the positioning device;
FIG. 7 is a top view of an apparatus for manufacturing bags equipped with spouts, to which the bag supply device according to the present invention is applied; and
FIGS. 8A through 8F illustrate a spout attachment process, in the order of the steps, that is carried out by the spout attachment device which is part of the apparatus for manufacturing bags equipped with spouts.

### DETAILED DESCRIPTION OF THE INVENTION

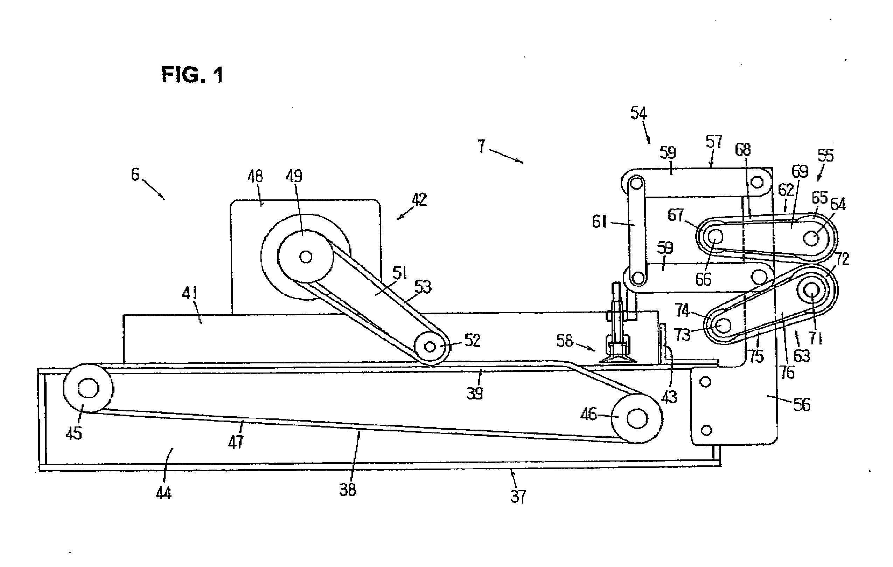

A bag supply device according to the present invention will now be described in detail below with reference to FIGS. 1 to 8F.

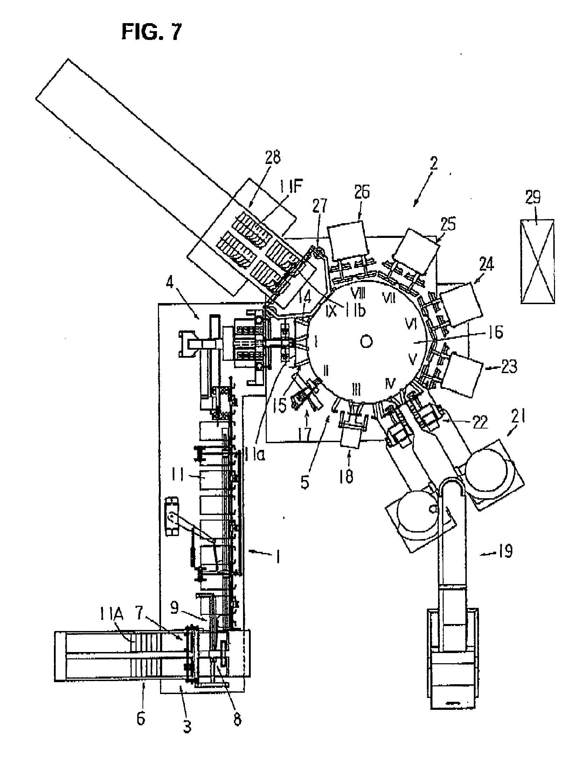

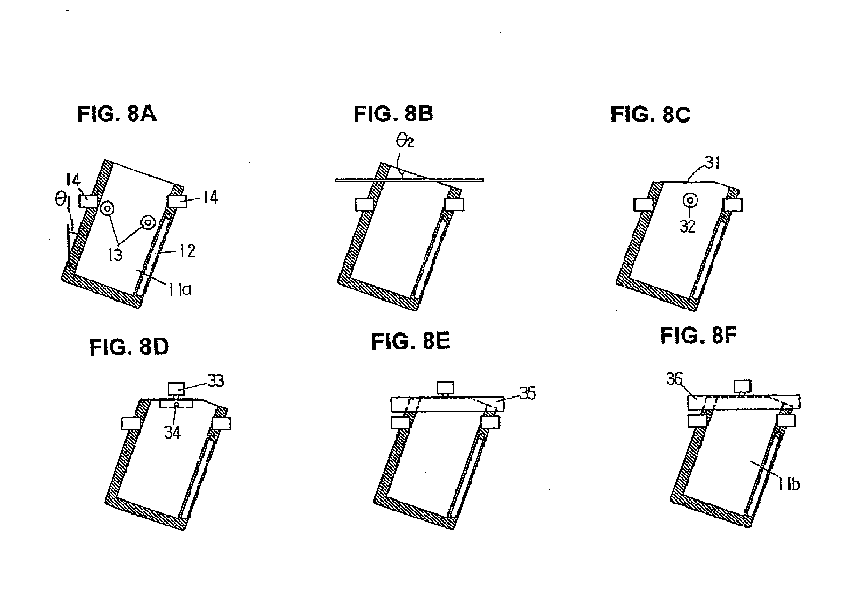

First, an apparatus for manufacturing bags equipped with spouts (called "spout-equipped bag manufacturing apparatus") will be described with reference to FIGS. 7 and 8. The bag supply device according to the present invention is incorporated into the spout-equipped bag manufacturing apparatus as a part thereof.

The spout-equipped bag manufacturing apparatus shown in FIG. 7 includes a gas injection and sealing device 1 that blows a gas into an airbag portion of a bag and then seals it, a spout attachment device 2 that attaches a spout to a corner portion of a bag formed with an airbag portion, the bag supply device 3 according to the present invention supplies bags to the gas injection and sealing device 1, and another bag supply device 4 that is installed between the gas injection and sealing device 1 and the spout attachment device 2.

The spout attachment device 2 is a double attachment type, and various devices (described below) that carry out the spout attachment operations are provided around a double rotary bag transfer device 5 (see, for example, Japanese Patent Application Laid-Open (Kokai) No. 2004-244085). Two bags are transferred by the rotary bag transfer device 5 intermittently and simultaneously along a circular movement path, and the two bags undergo various spout attachment operations simultaneously at various stop positions.

The bag supply device 3, although will be described in detail below, includes
a conveyor magazine 6 in which numerous empty bags are placed on its belt conveyor and offset in the lengthwise direction so that the uppermost bag comes to the front,
a first transfer device 7 that receives bags one at a time from the conveyor magazine 6 and feeds them to a positioning device 8,
the positioning device 8 that conveys the bags fed from the first transfer device 7 and positions them at a predetermined position, and
a second transfer device 9 that transfers the positioned bag from the positioning device 8 to a predetermined position on the line of a gas injection and sealing device 1.

The conveyor magazine 6, the first transfer device 7, and the positioning device 8 are provided so that two each of the same devices are located adjacent and in parallel so as to correspond to the double spout attachment device 2. Meanwhile, there is only one second transfer device 9 is provided, and it transfers two bags at the same time.

A bag 11 supplied by the bag supply device 3 is square in top view (when set flat horizontally) and is sealed on three sides (see FIG. 8A). The airbag portion 12 is formed in the up and down direction along one sealed side edge of the bag, and an inlet opening is formed at the upper end of the air bag portion 12. A bag that is thus formed with an airbag portion, such as the bag 11, is disclosed in, for example, Japanese Patent Application Laid-Open (Kokai) Nos. 2009-12800 and 2007-118961.

In the gas injection and sealing device 1, the bags 11 supplied from the bag supply device 3 (directly from the second transfer device 9) are intermittently transferred in pairs in the bag width direction and in a horizontal plane; and during this transfer, a gas is blown into the airbag portion 12 through the inlet opening, and then the inlet opening is sealed to trap the pressurized gas inside the airbag portion 12.

Japanese Patent Application Laid-Open (Kokai) Nos. 2009-12800 and 2007-118961 describe methods and apparatus in which a gas is blown into an airbag portion, and the airbag portion is then sealed. The methods and apparatuses described in these patent references all involve a vertical type (in which two edges of a bag are clamped or held by left and right grippers, and the bag is transferred intermittently while hanging down vertically while a gas is being blown into the airbag portion and the airbag portion is sealed); however, such methods and apparatuses is applicable to the gas injection and sealing device 1 by switching to a horizontal type (in which the bag is transferred intermittently in a horizontal plane or horizontally while a gas is being blown into the airbag portion and then the airbag portion is sealed).

The bag 11 in which a gas has been sealed in its airbag portion 12 by the gas injection and sealing device 1 (hereinafter such a bag is referred to as a bag 11a) is transferred to the bag supply device 4 while still kept horizontal. The bag supply device 4 uses suction cups 13 (see FIG. 8A) to hold the upper face of the bag 11 a, the bag 11a is then switched from a horizontal state (in which the bag surface is within a horizontal plane) to a vertical state (in which the bag surface is within a vertical plane), and the bag 11a is supplied to the grippers of the rotary bag transfer device 5 in a state that the bag is inclined by an angle θ1. The rotary bag transfer device 5 is a double transfer type, so that the bag supply device 4 supplies one bag to each of the pair of grippers 14, 15 (a total of two bags) at the same time.

The rotary bag transfer device 5 is provided with pairs of grippers (a total of 18 pairs) at a constant angular spacing around a table 16 that rotates intermittently. The pairs of grippers 14 and 15 are rotated intermittently by a constant angle along a circular movement path, and they stop nine times during a single rotation of the table 16, and various spout attachment steps are performed on the clamped bags 11a by various devices provided at the various stop positions.

When the first stop position (stop position 1) is a stop position to which the bag 11a is supplied from the bag supply device 4, a corner cutting device 17 is provided near the second stop position (stop position II), and an opening device 18 is provided near the third stop position (stop position III). A spout supply conveyor 19, a part feeder 21, and spout insertion and temporary filling devices 22 are provided near the fourth stop position (stop position IV). Further, a first sealing device 23 is provided near the fifth stop position (stop position V), a second sealing device 24 is provided near the sixth stop position (stop position VI), and a third sealing device 25 is provided near the seventh stop position (stop position VII). A cooling device 26 is provided near the eighth stop position (stop position VIII), and a bag discharge device 27 and a conveyor 28 are provided near the ninth stop position (stop position IX).

The reference number 29 is a control device that controls all of such devices, which make up the apparatus for manufacturing a bag equipped with a spout, as the spout attachment device 2, the bag supply device 3, and the bag supply device 4.

The spout attachment step performed by the spout attachment device 2 will be described with reference to FIG. 7 and FIGS. 8A through 8F.

When the grippers 14,14 (grippers 15,15 are not shown) gripping the bag 11a stop at the stop position II (see FIG. 7), the corner cutting device 17 is actuated and, as shown in FIG. 8B, the corner part of the bag 11a is cut off to form a horizontal corner opening 31. The corner opening 31 is inclined by an angle 92 with respect to the width direction of the bag 11a. The angle θ1 described above is set on the basis of the inclination angle θ2 of the corner opening 31 that is to be formed in the bag 11a (θ1 = θ2).

At the stop position III, the opening device 18 is actuated and, as shown in FIG. 8C, a pair of suction cups 32 are moved forward and adhered to the sides of the bag 11a and then moved back to open the corner opening 31.

At the stop position IV, the spout insertion and temporary filling device 22 is actuated and, as shown in FIG. 8D, a spout 33 is inserted into the center of the corner opening 31, and then the spout 33 is temporarily sealed to both sides of the bag 11 a. In FIG. 8D, the reference numeral 34 is a temporary sealing point.

At the stop positions V to VII, the various sealing devices 23 to 25 are actuated and, as shown in FIG. 8E, the spout 33 is sealed to both sides of the bag 11a, and at the same time the two sides of the bag 11a are sealed together. The reference number 35 in FIG. 8E is a hot plate.

At the stop position VIII, the cooling device 26 is actuated, and the sealed parts are cooled as shown in FIG. 8F. The reference number 36 in FIG. 8F is a cooling plate.

At the stop position IX, the bag discharge device 27 is actuated, two bags 11b having spouts 33 are received from the two pairs of left and right grippers 14 and 15 (one bag from each pair), and these bags are arranged in two rows on the conveyor 28. On the conveyor 28, numerous bags are accumulated (to make a bag group 11F) in a state that the next bag goes under the preceding bag (see FIG. 7 in Japanese Patent Application Laid-Open (Kokai) No. H8-337217), with the bags offset in the bag width direction by about one-third of the bag width. The conveyor 28 is a conveyor provided in a conveyor magazine that supplies the bags 11b (or bag group 11F) to a content filling device (not shown), and the accumulated bag group 11F is supplied directly to the filling device.

One example of the bag supply device according to the present invention will be described with reference to FIGS. 1 to 6.

As described above, the bag supply device 3 includes, as seen from FIG. 7, the conveyor magazine 6, the first transfer device 7, the positioning device 8, and the second transfer device 9.

The conveyor magazine 6 is itself known publicly (see Japanese Patent Application Laid-Open (Kokai) No. 2010-36913, for example), and, as shown in FIG. 1, it comprises a conveyor box 37 that is installed on a base (not shown), a belt conveyor 38 that is installed in the conveyor box 37, guide plates 41 that are installed on the left and right sides (or both sides) of the belt conveyor 38 (only one guide plate 41 is illustrated) and on the upper plate 39 of the conveyor box 37, a quick transfer mechanism 42 that is provided at an upper part of the belt conveyor 38, and a positioning stopper 43 that is installed on the upper plate 39.

The belt conveyor 38 includes pulleys 45 and 46, which are rotatably supported on the left and right side plates 44 (only one side plate is shown) of the conveyor box 37, and a plurality of belts 47, which are wound around these pulleys 45 and 46. The pulley 46 is connected to and rotated by a drive source (not shown). The upper part of the pulley 45 protrudes from a hole or opening formed in the upper plate 39, and the pulley 46 is provided inside the conveyor box 37 for its entirety. Upon leaving the pulley 45, the belts 47 move forward (toward the positioning stopper 43) while sliding over the upper plate 39 and then go into the conveyor box 37 through a hole formed in the upper plate 39 in front of the pulley 46.

The quick transfer mechanism 42 comprises a drive box 48, which is installed on the conveyor box 37 and houses therein a drive mechanism including an internal drive source, a rotating pulley 49, which is connected to the drive mechanism in the drive box 48, a free arm 51, which is attached to the drive box 48 so as to pivot concentrically with the pulley 49, a pulley 52, which is attached to the free arm 51, and a quick transfer belt 53, which is wound around the pulleys 49 and 52.

In this conveyor magazine 6, numerous bags (of the empty bag group 11A shown in FIG. 7), which are stacked so that the mouths of the bags face forward and the uppermost bag is offset to the front are placed on the belts 47, and these bags are conveyed forward by the belts 47 in a horizontal plane or horizontally while the left and right edges of the bags are guided by the guide plates 41. The conveyance direction is parallel to the lengthwise direction of the bag 11. When the uppermost empty bag of the bag group 11A comes into contact with the quick transfer belt 53, since the moving speed of the quick transfer belt 53 is higher than the moving speed of the belts 47, only the uppermost bag is separated from the group 11A and quickly moved forward (toward the positioning stopper 43), and then the bag is stopped and positioned when it hits or comes into contact with the positioning stopper 43.

The first transfer device 7 includes a first transfer mechanism 54 and a second transfer mechanism 55. At second transfer mechanism 55, the bag 11 that has stopped upon hitting the positioning stopper 43 of the conveyor magazine 6 is held by suction and raised. The second transfer mechanism 55 receives the bag 11 from the first transfer mechanism 54 and then transfers it to the positioning device 8 (see FIG. 7).

The first transfer mechanism 54 comprises a parallel link mechanism 57 that is installed on a support plate 56 fixed to the lateral plates 44 of the conveyor magazine 6, a pair of suction cups 58 that are installed facing downward from the parallel link mechanism 57, and a drive device (air cylinder, not shown) that actuates the parallel link mechanism 57. Each one of two (upper and lower) levers 59 is connected at one end to the support plate 56 so as to pivot up and down, a link 61 is connected to the other ends of the levers 59, and the parallel link mechanism 57 is constituted by these members.

The second transfer mechanism 55 comprises a pair (upper and lower) belt feed members 62 and 63. The upper belt feed member 62 has a pulley 65 that is fixed to a rotary shaft 64, a pulley 67 that is fixed to a rotary shaft 66, a plurality of belts 68 that are wound around these two pulleys, and a pair of side plates 69 that rotatably connect the shafts of these pulleys. The lower belt feed member 63 is structured in the same manner as the upper belt feed member 62, and it has a pulley 72 that is fixed to a rotary shaft 71, a pulley 74 that is fixed to a rotary shaft 73, a plurality of belts 75 that are wound around these two pulleys, and a pair of side plates 76 that rotatably connect the shafts of these pulleys.

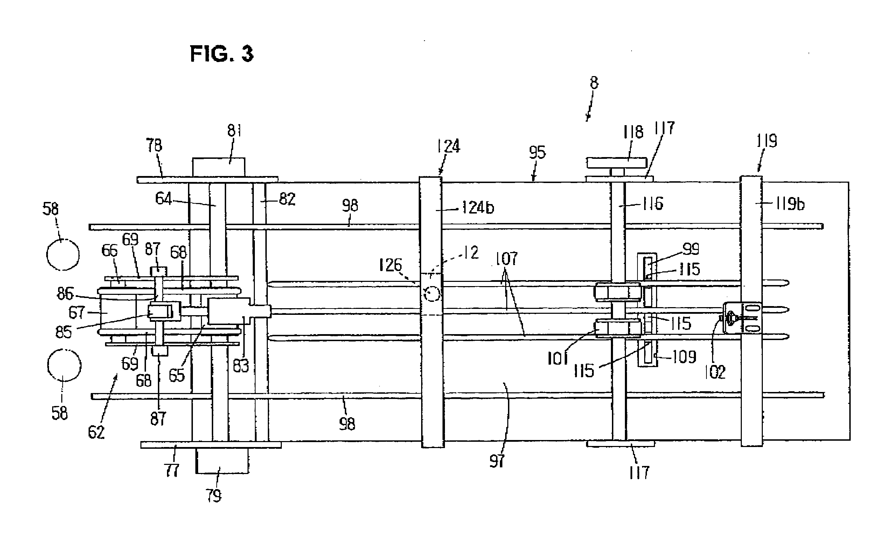

The rotary shaft 64 of the pulley 65 and the rotary shaft 71 of the pulley 72 are, as seen from FIG. 3, respectively, supported at both ends, horizontally and rotatably, on attachment plates 77 and 78 installed on the side plates of the box of the positioning device 8.

The second transfer mechanism 55 comprises a drive mechanism for rotating the pulleys 65 and 72. This drive mechanism has a motor 79, which is installed on the attachment plate 77, and a gearbox 81, which is installed on the attachment plate 78. The motor 79 rotates the rotary shaft 64 counterclockwise in FIG. 1. The rotation of the rotary shaft 64 is transmitted to the rotary shaft 71 by a plurality of gears built into the gearbox 81, and the rotary shaft 71 is rotated backward and at the same speed as the rotary shaft 64. Consequently, the pulleys 65 and 72 rotate backward and at the same speed, and the belts 68 and 75 rotate backward and at the same speed.

The second transfer mechanism 55 further includes a pivot mechanism that pivots the belt feed members 62 and 63 up and down, in a vertical plane, around the rotary shafts 64 and 71, respectively. The pivot mechanism of the upper belt feed member 62 has an attachment shaft 82 to which the ends of the attachment plates 77 and 78 are fixed, an air cylinder 83 that is connected at the rear end to the attachment shaft 82, a lever 85 that is able to pivot within a vertical plane and whose upper end is linked to a shaft 84 fixed to the attachment plates 77 and 78, and a pair of links 87 that are linked at one end to a shaft 86 installed at the lower end of the lever 85 and that are linked at the other end to the side plates 69. The lower pivot mechanism of the belt feed member 63 is structured in the same manner as the pivot mechanism of the upper belt feed member 62, and its attachment shaft 88, air cylinder 89, shaft 91, lever 92, shaft 93, and links 94, respectively, correspond to the attachment shaft 82, air cylinder 83, shaft 84, lever 85, shaft 86, and links 87 of the pivot mechanism of the upper belt feed member 62. The distal ends of the piston rods of the air cylinders 83 and 89 are, respectively, linked at intermediate positions of the levers 85 and 92.

As seen from FIG. 1, in the first transfer device 7, first the drive device of the first transfer mechanism 54 is actuated at a specific timing, the parallel link mechanism 57 operates downward, the suction cups 58 thus descend so as to hold, by suction, the upper surface of the bag 11 which hits and in contact with the stopper 43 of the conveyor magazine 6 and was stopped thereby, and then the parallel link mechanism 57 operates upward so that the suction cup 58 and the bag 11 are raised. During this operation, the suction cups 58 maintain their downward orientation. The movement path of the suction cups 58 during the operation of the parallel link mechanism 57 is in the form of an arc; accordingly, the bag 11 held by the suction cups 58 is raised while being moved toward the downstream side (the second transfer mechanism 55 side); and at the end point of this movement, the distal or front end of the bag 11 arrives between the pair of belt feed members 62 and 63 of the second transfer mechanism 55. So as to make the acceptance of the distal end of the bag 11 easier, the belt feed members 62 and 63 during this operation are kept open, and particularly the opening of the lower belt feed member 63 (in its downward tilt) is larger than the upper belt feed member 62 (in its upward tilt).

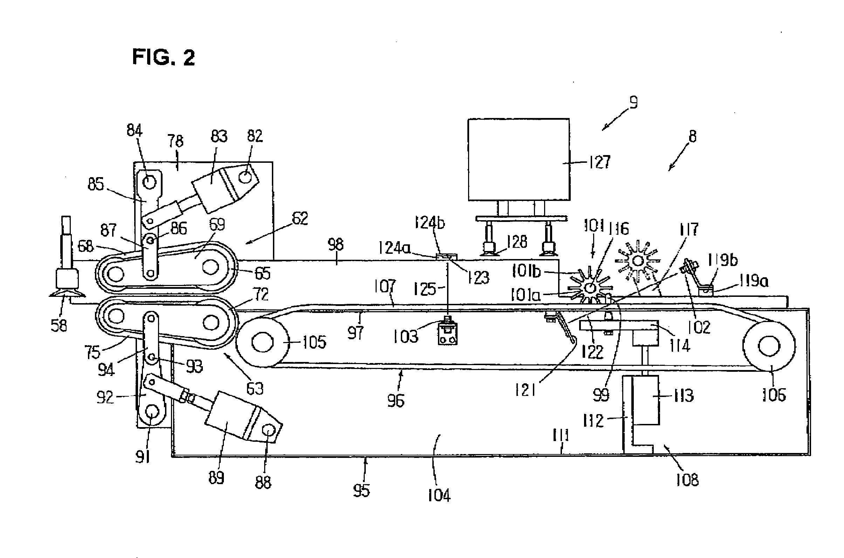

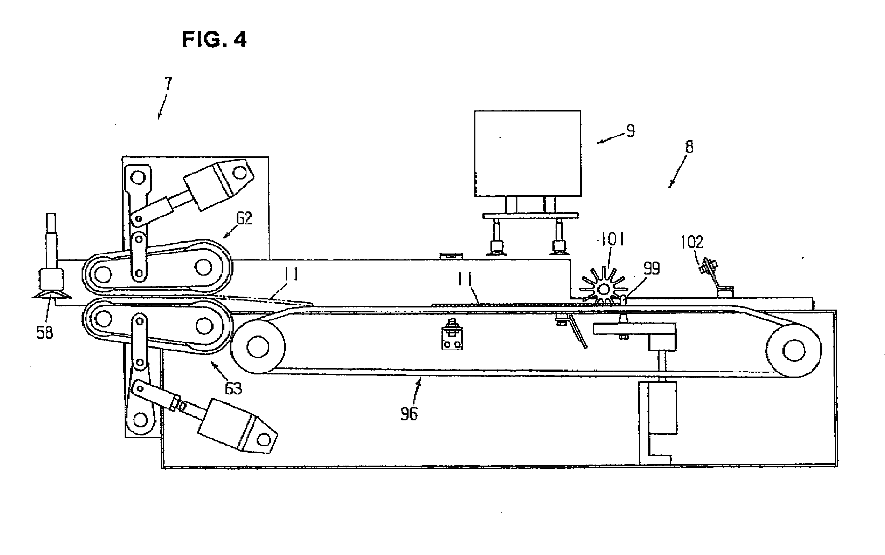

Then, as seen from FIG. 2, the air cylinders 83 and 89 operate to close the belt feed members 62 and 63, which causes the distal (front) end of the bag 11 to be clamped or held in between from above and below by the belts 68 and 75 of the belt feed members 62 and 63. Then, the suction of the suction cups 58 on the bag 11 is released, and at the same time the motor 79 is actuated to rotate the pulleys 65 and 72 and the belts 68 and 75 of the belt feed members 62 and 63. This causes the bag 11 to be pulled into the belt feed members 62 and 63 and then fed out toward the positioning device 8 (see FIG. 4).

The positioning device 8 includes, as shown in FIG. 2, a conveyor box 95 that is installed on a stand (not shown), a belt conveyor 96, which is installed in the conveyor box 95, guide plates 98, which are installed on the left and right sides of the belt conveyor 96 on the upper plate 97 of the conveyor box 95, a positioning stopper 99 (see FIG. 4), which is installed at a predetermined location on the conveyance path of the belt conveyor 96, and a rotary brush 101 that goes up and down along an arc-shaped path near the stopper 99. The positioning device 8 further includes a first sensor 102 that is installed at a location above the upper plate 97 on the downstream side of the stopper 99, and a second sensor 103 that is installed in the conveyor box 95 on the upstream side of the stopper 99 on the conveyance path.

The belt conveyor 96 includes pulleys 105 and 106, which are rotatably supported by left and right side plates 104 (only one side plate is shown) of the conveyor box 95, and a plurality of belts 107, which are wound around the pulleys 105 and 106. The pulley 106 is connected to and rotated by a drive source (not shown). Upon leaving the pulley 105, the belts 107 exit the conveyor box 95 from a hole or opening formed in the upper plate 97, and then they are moved forward while sliding over the upper plate 97, and the belts 107 go back into the conveyor box 95 through a hole or opening formed in the upper plate 97 in front of the pulley 106.

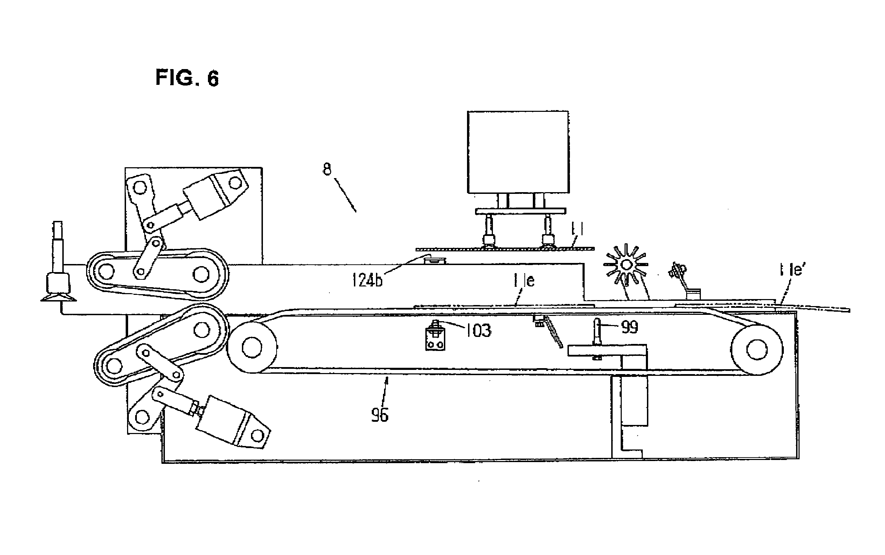

The stopper 99 is provided so as to go up and down through a hole 109 formed in the upper plate 97 of the conveyor box 95. The stopper 99 is moved up and down by means of an elevator mechanism 108 that is installed in the conveyor box 95. The elevator mechanism 108 includes a support block 112, which is installed on the bottom plate 111 of the conveyor box 95, an air cylinder 113, which is installed on the support block 112, and a support member 114, which is fixed to the distal end of the piston rod of the air cylinder 113. When the stopper 99 is moved up to its restricting position (the position shown in FIG. 2), the upper end of the stopper 99 protrudes up through the hole 109 to a position higher than the belts 107, so that the stopper 99 blocks the conveyance path for bags. Notches 115 are, as seen from FIG. 3, formed in the upper part of the stopper 99 so as to correspond in number to the belts 107 and so as not to interfere with the belts 107 at this restricting position. When the stopper 99 descends to its retracted position (the position shown in FIG. 6), the upper end of the stopper 99 is located lower than the belts 107, and the conveyance path is cleared and not blocked.

The rotary brush 101 is substantially the same as the ratchet wheel used in the conveyor magazine disclosed in Japanese Patent Application laid-Open (Kokai) No. 2014-999. The rotary brush 101 is fixed to a rotary shaft 116. The rotary shaft 116 is rotatably supported by a pair of pivot arms 117 that pivot in a vertical plane parallel to the conveyance path of the belt conveyor 96, and a pulley 118 is, as seen from FIG. 3, fixed to one end of the rotary shaft 116. The pivot arms 117 are axially supported at their lower end by the side plates 104 of the conveyor box 95. The rotary brush 101 has a plurality of flexible fins 101b (see FIG. 2) that extend in the radial direction and are attached around a shaft 101a.

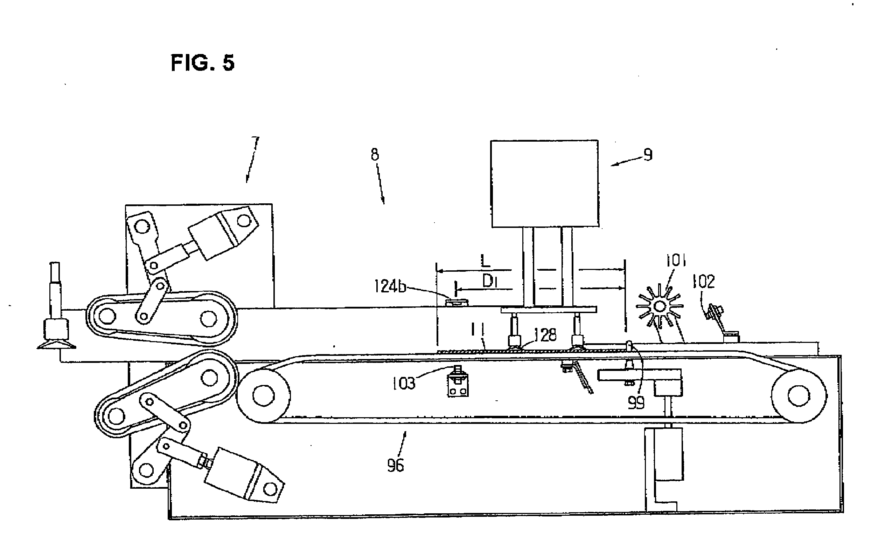

A motor (not shown) that rotates the rotary shaft 116 via the pulley 118 and an air cylinder (not shown) that pivots the pivot arms 117 are housed in the conveyor box 95. As the pivot aims 117 pivot, the rotary brush 101 pivots in the forward and backward direction along an arc-shaped movement path between a feed position (the position indicated by a solid line in FIG. 2) and a retracted position (the position indicated by a two-dot chain line in FIG. 2). The feed position and the retracted position are located on the upstream side and downstream side, respectively, of the conveyance path, with the stopper 99 in between. The feed position is near the stopper 99. The rotary brush 101 touches the bag 11 on the belt conveyor 96 at the feed position (see FIG. 4), and it is raised up over the stopper 99 upon pivoting from the feed position toward the retracted position, so that there is no contact of the rotary bush 101 with the bag 11 on the belt conveyor 96 at the retracted position (see FIG. 5).

The first sensor 102 in the shown example is a photo-electric sensor of reflective type, and it is installed on an attachment plate 119 fixed to the side plates 104 of the conveyor box 95. The attachment plate 119 includes a pair of vertical parts 119a that are fixed to the left and right side plates 104 of the conveyor box 95 (only one side is shown in FIG. 2) and a horizontal part 119b that connects the upper ends of the vertical parts 119a. The horizontal part 119b is provided at a location above the upper plate 97 of the conveyor box 95, and the first sensor 102 is provided in an approximate center position of the horizontal part 119b.

A reflector plate 121 is installed in the conveyor box 95 so as to correspond to (or face) the first sensor 102. As seen from FIG. 2, the light (see the line 122 facing diagonally downward) emitted by the first sensor 102 and the light reflected by the reflector plate 121 pass through the notches 115 (cut out from the center part) formed in the stopper 99 and the hole 109 (see FIG. 3) formed in the upper plate 97 of the conveyor box 95. However, when the bag 11 hits and is in contact with the stopper 99, the light emitted by the first sensor 102 is blocked by the bag 11, and the first sensor 102 is unable to detect this reflected light.

In the shown structure, the first sensor 102 is provided outside of the conveyor box 95, but it can be instead provided in the interior of the conveyor box 95. In this case, the reflector plate 121 is provided outside of the conveyor box 95.

The second sensor 103 is also a photo-electric sensor of reflective type in this example, and it is installed in the conveyor box 95 as shown in FIG. 2. An attachment plate 124, with which a reflector plate 123 is fixed to the side plates 104 of the conveyor box 95, is installed so as to correspond to the first sensor 102. The attachment plate 124 is comprised of a pair of vertical parts 124a (only one is shown in FIG. 2), which are fixed to the left and right side plates 104 of the conveyor box 95, and a horizontal part 124b, which connects the upper ends of the vertical parts 124a together. The horizontal part 124b is provided at a location above the upper plate 97 of the conveyor box 95, and the first sensor 102 is installed on the lower face of the horizontal part 124b. The light (indicated by line 125 extending vertically upward in FIG. 2) emitted from the first sensor 102 and the light reflected by the reflector plate 123 both pass through a hole 126 (see FIG. 3) formed in the upper plate 97 of the conveyor box 95. However, if a bag 11 is at a location that blocks the hole 126, then the light emitted by the second sensor 103 will be blocked by that bag 11, and the second sensor 103 is unable to detect this reflected light.

In the shown structure, the second sensor 103 is provided inside the conveyor box 95; however, it can be instead provided outside of the conveyor box 95. In such a case, the reflector plate 123 is provided inside of the conveyor box 95.

As shown in FIG. 5, the detection position (a position along the conveyance direction of the belt conveyor 96) of the second sensor 103 is set so that the spacing D1 from this detection position to the stopper 99 is less than the length L of the bag 11 (D1 < L). In other words, the detection position where the second sensor 103 detects the bag 11 can be set as desired within a range of 0 < D1 < L.

As will be described below, the horizontal part 124b of the attachment plate 124 also functions as a separating member that prevents a plurality of bags from being taken by the second transfer device 9. In this case, the attachment plate 124 (and particularly the horizontal part 124b) does not interfere with the rising and falling suction cups 128, etc., and it is installed along the ascending path of the rising bag 11.

The second transfer device 9 includes, as seen from FIG. 2, an air cylinder 127 and a plurality of suction cups 128 installed at the distal end (the lower end) of the piston rod of the air cylinder 127. The suction cups 128 are provided on the conveyance path of the belt conveyor 96, so that when the air cylinder 127 operates, the suction cups 128 are moved up and down in the vertical direction at a location between the stopper 99 and the second sensor 103. The air cylinder 127 itself also is moved, by the power from a drive source (an air cylinder; not shown), a specific distance within a vertical plane along a rail 129 (see FIG. 7) provided perpendicular to the conveyance path,.

As described above, two positioning devices 8 are provided in parallel. Therefore, in each positioning device 8, each bag 11(thus in total two bags) is positioned one at a time when it hits or comes into contact with the stopper 99 on the conveyance path of the belt conveyor 96, and each second transfer device 9 simultaneously transfers each empty bag 11 (total of two bags) positioned by the positioning devices 8 to a predetermined position of the gas injection and sealing device 1.

The suction cups 128 of the second transfer device 9 is moved down on the conveyance path of the belt conveyor 96, raised after picking up the bags 11, moved in a horizontal plane in a direction perpendicular to the conveyance path (the width direction of the bags 11), and then moved down to release their suction. The two bags 11 are as a result simultaneously placed at predetermined positions in the gas injection and sealing device 1.

In the shown example, the suction cups 128 are designed to be moved up and down as well as moved horizontally. However, the suction cups 128 can be designed to only goes up and down, so that the bags 11 are to be delivered to another transfer device (a chuck or another suction cup) at the ascension position (the delivery position) and then transferred by this other transfer device to a predetermined position within the gas injection and sealing device 1.

When the suction cups 128 lift the bag 11 under suction, the end portion of this bag 11 hits or come into contact with the horizontal part 124b of the attachment plate 124. In this aspect, such a situation can occur that a plurality of bags have been taken by the first transfer device 7, these bags remain stuck together while being transferred to the positioning device 8, are conveyed by the belt conveyor 96 to the stopper 99, and are positioned while still not separated so that a plurality of bags are taken by the suction cups 128 (one, top bag being directly held by the suction cups 128 and bag(s) underneath being indirectly held by the suction cups 128 (by, for instance, static electricity)). When this happens, during the time that the suction cups 128 are lifting up the top bag 11 out of the plurality of bags, it is possible that the plurality of bags will hit the horizontal part 124b of the attachment plate 124 and deform (bend), so that air goes into between these bags, so that the bags not directly held by the suction cups 128 (extra bags) are separated and fall off to the conveyance path.

The control device 29 (see FIG. 7) controls the belt conveyor 96, the stopper 99, the rotary brush 101, and the second transfer device 9 as follows, on the basis of detection signals from the first sensor 102 and the second sensor 103.

When the detection signal of the first sensor 102 (the signal being one indicating that no reflected light has been detected) is sent to the control device 29, the belt conveyor 96 stops under a command from the control device 29, and the rotary brush 101 that was in the retracted position starts to rotate, moves to the feed position, and comes into contact with the upper face of the bag 11. The rotary brush 101 can be kept rotating constantly. As a result, the distal end of the bag 11 is pressed by an appropriate biasing force against the stopper 99, and the bag 11 is reliably positioned by the stopper 99.

Then, the rotary brush 101 is moved back to the retracted position under a command from the control device 29, the suction cups 128 of the second transfer device 9 descend and pick up the bag 11 (see FIG. 5), and then ascend. After the suction cups 128 have risen, the bag 11 the suction cups are holding is transferred to the gas injection and sealing device 1, as described above.

When only one bag has been transferred from the first transfer device 7 to the positioning device 8 (see FIG. 5), the bag 11 held by the suction cups 128 is raised along with the suction cups 128, and once the height of the bag 11 goes past the position of the reflector plate 123 installed on the attachment plate 124, the light emitted from the second sensor 103 and was, up to then, being blocked by the bag 11 is reflected by the reflector plate 123. The detection signal (a signal indicating that reflected light has been detected) from the second sensor 103 in this case means that there is no bag 11 on the belt conveyor 96, and the control device 29 receiving this detection signal does not emit any particular command.

On the other hand, when a plurality of bags (such as two bags) have been transferred from the first transfer device 7 to the positioning device 8, then it may happen that only the uppermost bag 11 that is being directly held by the suction cups 128 is raised along with the suction cups 128, and the extra bag 11e (see FIG. 6) is separated and left on the belt conveyor 96. Another possibility is that not just the uppermost bag 11 that is being directly held by the suction cups 128 but also the extra bag 11a are both raised together; and when two bags go past the horizontal part 124b of the attachment plate 124, the extra bag 11 e is eventually separated and falls onto the belt conveyor 96. In either case, the light emitted from the second sensor 103 remains blocked by the extra bag 11e. The detection signal from the second sensor 103 in this case (such signal being a signal indicating that no reflected light has been detected) means that there is a bag 11 on the belt conveyor 96; and when this detection signal is sent to the control device 29, the stopper 99 descends from the restricting position to the retracted position under the command from the control device 29, and the belt conveyor 96 begins rotating.

The control device 29 is set to issue the above-described command on the basis of the detection signal of the second sensor emitted when a specific length of time (at the point when the bag 11 held by the suction cups 128 goes past the position of the reflector plate 123) has elapsed since the suction cups 128 are started to move upward.

The operation of the bag supply device described above will be described below in time series, although there is some duplication of the description made above.
(1) In the conveyor magazine 6, the uppermost bag 11 out of the bag group 11A placed on the belt conveyor 47 is quickly fed forward, one bag at a time, by the quick transfer mechanism 42, and this bag is positioned when the distal (front) end of the bag hits or comes into contact with the positioning stopper 43.
(2) The suction cups 58 of the first transfer device 7 pick up the bag 11 that is in contact with the positioning stopper 43, and then they are raised so that the distal end of the bag 11 is fed in between the pair of belt feed members 62 and 63. The belt feed members 62 and 63 feed the bag 11 onto the belt conveyor 96 of the positioning device 8 (see the bag 11 drawn by two-dot chain lines in FIG. 4).
(3) In the positioning device 8, the bag 11 is conveyed forward by the belt conveyor 96, and it hits the stopper 99 (see the bag 11 drawn by solid lines in FIG. 4).
(4) The detection signal of the first sensor 102 is sent to the control device 29, the belt conveyor 96 as a result stops under a command from the control device 29, the rotary brush 101, which are in the retracted position, begins to rotate and is moved to the feed position, where it comes into contact with the upper face of the bag 11. The rotary brush 101 can be kept rotating constantly. As a result, the bag 11 is pressed by an appropriate pressing force against the stopper 99 and is positioned assuredly.
(5) The rotary brush 101 is moved up to the retracted position, and the suction cups 128 of the second transfer device 9 are descended and pick up the bag 11 (see FIG. 5), and then they are raised again and start transferring the bag 11 toward a predetermined position (the delivery position) of the gas injection and sealing device 1.
(6) If the detection signal emitted from the second sensor 103 at a specific timing after the suction cups 128 have started to be raised is a "signal indicating that reflected light has been detected," then the control device 29 does not emit any particular command upon receiving this detection signal. On the other hand, if the detection signal emitted from the second sensor 103 is a "signal indicating that no reflected light has been detected," the control device 29 instructs the stopper 99 to descend from the restricting (or protruding) position to the retracted (lowered) position, and the belt conveyor 96 starts rotating (see FIG. 6). Consequently, the extra bag 11e on the belt conveyor 96 is discharged further downstream from the stopper 99 along the conveyance path of the belt conveyor 96. In FIG. 6, the bag 11e drawn on the upstream side from the stopper 99 has yet to be discharged, while the bag 11e' drawn on the downstream side from the stopper 99 is almost finished being discharged. After the extra bag 11e is discharged by the belt conveyor 96, the stopper 99 returns to the restricting (protruded) position.

In the above-described structure, the stopper 99 is installed along the conveyance path of the belt conveyor 96, and extra bag(s) 11e is discharged by the belt conveyor 96, so that there is no need to provide any separate member for discharging the extra bag(s) 11e. However, a discharge belt conveyor that is a separate conveyor from the belt conveyor 96 can be provided (the length of the belt conveyor 96 can be reduced accordingly in such a case), so that the extra bag(s) 11e may be discharged by this discharge belt conveyor. Also, a pusher, a chuck, or some other discharge conveyor (conveyance member) can be installed instead of a discharge belt conveyor.

## Claims

1. A bag supply method that, the method comprising the steps of:
transferring bags one at a time, starting with a bag at a very top of the bags, from a magazine, in which numerous empty bags are stacked, to a positioning device,
conveying a bag in one direction on a conveyor of the positioning device,
then positioning the bag when the bag comes in to contact with a stopper at a predetermined position on a conveyance path,
holds the positioned bag with a suction cup,
raises the suction cup to lift the held bag from the conveyance path, and then
transfers the bag to a predetermined delivery position; wherein
said method, after the positioned bag is held by the suction cup and lifted up thereby from the conveyance path and upon detecting any extra bag remaining on an upstream side of the stopper on the conveyance path, retracts the stopper from the conveyance path, thus conveying an extra bag along the conveyance path to a downstream side of the stopper.

2. A bag supply device, comprising:
a magazine in which numerous empty bags are stacked,
a first transfer device that takes out and transfers bags one at a time from the magazine, starting with one at very top of the stack,
a positioning device that receives and conveys bags one at a time from the first transfer device, and positions a bag at a predetermined position on a conveyance path, and
a second transfer device that holds the positioned bag with a suction cup, raises the suction cup to lift the held bag up from the conveyance path, and transfers the bag to a predetermined delivery position;
wherein the positioning device comprises:
a conveyor on which a bag is placed to convey the bag in one direction,
a stopper that stops the bag at a predetermined position on the conveyance path of the conveyor,
a first sensor that detects a bag that is in contact with the stopper;
a second sensor that detects whether or not any extra bag remains on an upstream side of the stopper on the conveyance path, and
a control device that controls operation of the positioning device and the second transfer device on a basis of a detection signal from the first and second sensors; and
wherein
the stopper is movable between a restricting position where a bags is stopped and a retracted position where a bag passes through; and
the control device
operates the second transfer device on a basis of a detection signal from the first sensor and raises a bag held by the suction cup a specific height over the conveyance path, and
retracts the stopper to a retracted position thereof on a basis of a detection signal when the second sensor has detected an extra bag,
so that the extra bag is conveyed along the conveyance path to the downstream side of the stopper.

3. The bag supply device according to Claim 2, wherein the control device stops the conveyor on the basis of a detection signal from the first sensor and restarts the conveyor when the second sensor has detected the extra bag.

4. The bag supply device according to Claim 2 or 3, wherein
the conveyor is a belt conveyor comprising a plurality of belts, and
the stopper is provided so as to move up and down, and an upper end thereof protrudes upward from between the belts at the restricting position.

5. The bag supply device according to Claim 2 or 3, wherein
the conveyor comprises an upstream conveyor and a downstream conveyor,
the upstream conveyor conveys a bag along the conveyance path at least until the bag comes into contact with the stopper, and
the downstream conveyor conveys the bag farther down the downstream side.

6. The bag supply device according to Claim 5, wherein
the upstream conveyor and the downstream conveyor are both a belt conveyor comprising a plurality of belts; and
the stopper is movable up and down, and an upper end thereof protrudes upward from between the belts of the upstream conveyor or the downstream conveyor at the restricting position.

7. The bag supply device according to any one of Claims 2 to 6, wherein,
the positioning device includes a separating member which is for preventing a plurality of bags from being taken away and is provided in a middle of an ascending path of a bag held by the suction cup of the second bag transfer device, so that the bag being raised by the suction cup contact the separating member.
